(19) Europäisches Patentamt
European Patent Office
Office européen des brevets

(11) Numéro de publication: **0 262 260 B1**

(12) # FASCICULE DE BREVET EUROPEEN

(45) Date de publication de fascicule du brevet: **29.01.92**

(51) Int. Cl.5: **C08G 2/36**

(21) Numéro de dépôt: **86201694.6**

(22) Date de dépôt: **02.10.86**

(54) **Procédé pour la fabrication de copolymères oxyméthyléniques thermiquement stables.**

(43) Date de publication de la demande:
**06.04.88 Bulletin 88/14**

(45) Mention de la délivrance du brevet:
**29.01.92 Bulletin 92/05**

(84) Etats contractants désignés:
**BE DE ES GB IT NL**

(56) Documents cités:
**FR-A- 1 287 151**
**US-A- 3 225 005**

(73) Titulaire: **SOLVAY**
**Rue du Prince Albert, 33**
**B-1050 Bruxelles(BE)**

(72) Inventeur: **Collard, André**
**Avenue Beaudouin, 1**
**B-1330 Rixensart(BE)**
Inventeur: **Declerck, Fredy**
**Snoekgracht, 7**
**B-1850 Grimbergen(BE)**

(74) Mandataire: **Nichels, William et al**
**Solvay Département de la Propriété Industrielle Rue de Ransbeek, 310**
**B-1120 Bruxelles(BE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 262 260 B1

## Description

La présente invention concerne un procédé pour la fabrication de copolymères oxyméthyléniques stabilisés contre la dégradation thermique.

Des polyoxyméthylènes ou polyacétals comprenant des enchaînements de motifs récurrents oxyméthyléniques ($-CH_2O-$) sont connus depuis de nombreuses années. On peut les fabriquer par polymérisation du formaldéhyde anhydre ou de son trimère cyclique, le trioxane.

Les homopolymères de polyoxyméthylène sont toutefois thermiquement instables. Cette instabilité thermique entraîne la dégradation des polymères avec dégagement de formaldéhyde, lorsqu'ils sont exposés de manière prolongée à des températures élevées, notamment au cours de leur mise en oeuvre.

On a remédié à cet inconvénient en fabriquant par exemple des polyoxyméthylènes modifiés contenant, en association avec les groupements oxyméthyléniques, des groupes oxyalkyléniques éventuellement substitués contenant au moins deux atomes de carbone adjacent. Pareils polyoxyméthylènes modifiés, de stabilité thermique supérieure à celle de l'homopolymère correspondant, ont été obtenus en copolymérisant le trioxane avec d'autres éthers cycliques contenant au moins deux atomes de carbone adjacents, tels que par exemple l'oxyde d'éthylène, le 1,3-dioxolane, les 1,3- et 1,4-dioxane, etc. (brevet FR-A-1221148 de CELANESE CORP.) ou encore avec un comonomère tel que l'épichlorhydrine (brevet US-A-3072609 de CELANESE CORP.).

Ces polyoxyméthylènes modifiés sont néanmoins eux-mêmes relativement dégradés sous l'effet de contraintes thermiques à cause de l'instabilité des extrémités oxyméthyléniques des chaînes polymériques comprises entre le dernier groupement oxyalkylénique et le groupement terminal hydroxylé.

Un moyen conventionnel de remédier à cet inconvénient consiste à effectuer une dépolymérisation par hydrolyse sélective de ces extrémités de chaînes afin d'obtenir un produit thermiquement stable. Pareil moyen est décrit par exemple dans le brevet FR-A-1287151 de CELANESE CORP.

Cette hydrolyse sélective est toutefois à l'origine d'un problème sérieux. Elle doit, en effet, pour être efficace, être conduite à une température aussi proche que possible de la température de fusion du polyoxyméthylène modifié auquel on l'applique. Or, dans ces conditions, et surtout lorsque la température de fusion du polymère est relativement élevée, cette hydrolyse entraîne le plus souvent une agglomération des particules de polymère entre elles, ce qui se traduit par l'obtention d'une masse compacte de polymère. Un tel phénomène est appelé ci-après "prise en masse" du polymère.

La présente invention vise à fournir un procédé pour la fabrication de copolymères oxyméthyléniques thermiquement stables ne présentant pas cet inconvénient.

L'invention concerne à cet effet un procédé pour la fabrication de copolymères oxyméthyléniques stabilisés contre la dégradation thermique comprenant le chauffage du copolymère dans un milieu contenant de l'eau et un éther cellulosique bisubstitué.

Les copolymères auxquels s'applique le procédé selon l'invention comprennent principalement des enchaînements d'unités récurrentes oxyméthyléniques et contiennent également des unités récurrentes oxyalkyléniques. Par unités récurrentes oxyalkyléniques, on entend désigner les groupes oxyalkyléniques contenant au moins deux atomes de carbone adjacents. Ces groupes oxyalkyléniques peuvent contenir des substituants, tels que des groupes alkyles eux-mêmes éventuellement substitués, par exemple par des halogènes. Des substituants typiques sont par exemple les groupes méthyle, éthyle et chlorométhyle. A titre d'exemples d'unités récurrentes oxyalkyléniques préférées, on peut citer le groupe oxyéthylénique ($-OCH_2-CH_2-$) et le groupe 2-chlorométhyloxyéthylénique

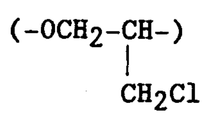

En général, la proportion d'unités récurrentes oxyalkyléniques présents dans les copolymères est comprise entre 0,05 et 20 % molaires, de préférence entre 0,1 et 10 % molaires. Le procédé selon l'invention s'applique particulièrement bien à la fabrication de copolymères contenant entre 1 et 4 % molaires d'unités récurrentes oxyalkyléniques. Ces unités récurrentes oxyalkyléniques sont de préférence de même nature mais la présence, dans les copolymères d'unités oxyalkyléniques de natures différentes, n'est pas exclue.

Ces copolymères peuvent être obtenus de manière conventionnelle en copolymérisant le trioxane et une quantité appropriée d'un comonomère choisi parmi les éthers cycliques dont la molécule contient au moins deux atomes de carbone adjacents et dont le groupe oxyalkylénique répond aux limitations

mentionnées ci-dessus. A titre d'exemples de comonomères préférés, on peut citer l'oxyde d'éthylène, le 1,3-dioxolane, les 1,3- et 1,4-dioxane, le 1,3,5-trioxépane, le 1,3,6-trioxocane, l'épichlorhydrine et le 4-chlorométhyl-1,3-dioxolane, l'oxyde d'éthylène étant particulièrement préféré.

La copolymérisation est effectuée, de manière connue, en présence d'un catalyseur à base d'un complexe de coordination de fluorure de bore avec un composé oxygéné organique contenant un atome électro-donneur tel que l'oxygène ou le soufre. A titre de composés oxygénés organiques utilisables pour créer le complexe de coordination avec le fluorure de bore, on peut citer les alcools, les phénols, les éthers, les acides, les anhydrides d'acides, les esters, les cétones, les aldéhydes, les sulfures de dialkyle et les mercaptans. Les catalyseurs préférés sont les éthérates de fluorure de bore, plus particulièrement les complexes de coordination du fluorure de bore avec les éthers diéthylique et diisoamylique.

Généralement, le catalyseur est présent dans le milieu de copolymérisation en concentratin telle que la teneur en fluorure de bore soit comprise entre environ 0,001 et environ 0,1 % en poids par rapport au poids de trioxane présent dans ce milieu.

Le trioxane et le (ou les) comonomère(s) choisi(s) sont généralement introduits dans le milieu de copolymérisation sous forme aussi anhydre et aussi pure que possible, ce qui permet d'obtenir des copolymères de haut poids moléculaire moyen avec un meilleur rendement.

La copolymérisation peut être effectuée en l'absence ou en présence d'un solvant organique anhydre inerte vis-à-vis des monomères.

Lorsqu'on effectue la copolymérisation en l'absence de solvant organique, on opère le plus généralement au sein du trioxane à l'état fondu dans lequel on a dissous le(s) comonomère(s) et le catalyseur. De préférence, toutefois, on effectue la copolymérisation en présence d'un solvant organique dans lequel le trioxane est au moins partiellement soluble. Ce solvant organique est généralement choisi parmi les hydrocarbures aliphatiques, cycloaliphatiques et aromatiques.

A titre d'exemples d'hydrocarbures aliphatiques, on peut mentionner les alkanes, tels que le n-hexane, le n-heptane, le n-octane, le n-nonane, leurs isomères et mélanges.

A titre d'exemples d'hydrocarbures cycloaliphatiques, on peut mentionner les cycloalkanes, tels que le cyclohexane.

A titre d'exemples d'hydrocarbures aromatiques, on peut mentionner le benzène et ses dérivés de substitution tel que le toluène et les xylènes.

On préfère en général effectuer la copolymérisation en présence d'un alkane ou d'un mélange d'alkanes contenant de 7 à 9 atomes de carbone qui, dans certaines conditions de concentration et de température, conduisent à un mélange biphasique, dont la phase légère est essentiellement constituée de l'alkane contenant un peu de trioxane et dont la phase lourde, qui est le site préférentiel de la polymérisation, est très riche en trioxane.

La copolymérisation est généralement effectuée à une température comprise entre 0 et 100 °C, de préférence entre 30 et 80 °C, pendant une durée généralement comprise entre environ 5 minutes et environ 48 heures, et de préférence entre 30 minutes et 20 heures.

Lorsqu'on effectue la copolymérisation en présence d'un solvant organique tel que mentionné plus haut, la concentration initiale en trioxane du milieu est généralement comprise entre 0,5 et 900 % en poids par rapport au poids de solvant, de préférence entre 10 et 400 % en poids. La concentration initiale en comonomère du milieu est déterminée en fonction de la proportion dans laquelle on souhaite l'incorporer dans le copolymère final.

Cette concentration peut être ajustée en prenant en compte la réactivité du comonomère choisi et son taux d'incorporation dans le copolymère, déterminés par des essais de routine préalables. En général, cette concentration en comonomère est comprise entre 0,1 et 50 % molaires, de préférence entre 0,2 et 20 % molaires, par rapport au trioxane présent dans ce milieu.

A l'issue de l'étape de copolymérisation proprement dite, on ajoute généralement au milieu de polymérisation un agent neutralisant l'activité catalytique; à titre de pareil agent, on peut citer les amines aliphatiques, telles que la tributylamine, par exemple.

Selon l'invention, le copolymère obtenu est ensuite chauffé dans un milieu contenant de l'eau et un éther cellulosique bisubstitué.

Les conditions opératoires générales de ce traitement du copolymère par chauffage dans ledit milieu (appelé ci-après par commodité "milieu d'hydrolyse") sont choisies de manière à provoquer une dépolymérisation par hydrolyse sélective, des extrémités oxyméthyléniques instables des chaînes macromoléculaires du copolymère.

A cet effet, le traitement par chauffage du copolymère peut être effectué le plus commodément dans le milieu même dans lequel on a opéré la copolymérisation; dans ce cas, on ajoute simplement à ce milieu - dans l'enceinte dans laquelle la copolymérisation a été effectuée ou dans une enceinte distincte dans

laquelle ce milieu est transféré - au moins de l'eau et un éther cellulosique bisubstitué ainsi que, s'il n'a pas été ajouté précédemment, l'agent neutralisant l'activité catalytique mentionné plus haut pour constituer le milieu d'hydrolyse selon l'invention; on peut aussi effectuer ce traitement sur le copolymère séparé du milieu dans lequel il a été obtenu; dans ce dernier cas, on lave et on sèche généralement le copolymère pour éliminer les monomères n'ayant pas réagi, l'éventuel solvant organique et les résidus inactivés de catalyseur.

Dans tous les cas, le milieu d'hydrolyse comprend donc :

(1) le copolymère;
(2) de l'eau;
(3) l'éther cellulosique bisubstitué ainsi qu'éventuellement
(4) un agent de réglage du pH tel que défini ci-après;
(5) le solvant organique en présence duquel on a effectué la copolymérisation;
(6) le trioxane non copolymérisé;
(7) les résidus inactivés de catalyseur.

L'eau (2) peut être introduite dans le milieu d'hydrolyse par exemple sous forme de vapeur sous pression ou sous forme liquide; elle est présente de préférence sous cette dernière forme qui facilite la dissolution de l'éther cellulosique bisubstitué (3).

Une caractéristique essentielle du procédé selon l'invention est la présence, dans le milieu d'hydrolyse, d'éther cellulosique bisubstitué (3). On a en effet constaté avec surprise que seule la présence de pareil éther empêche la prise en masse du copolymère dans le milieu d'hydrolyse. Par éthers cellulosiques bisubstitués, on entend désigner les éthers de la cellulose dont au moins une partie des groupements hydroxyles contenus dans les unités anhydroglucoses constitutives sont substitués par deux substituants différents choisis parmi les radicaux alkyles et hydroxyalkyles.

Ces éthers cellulosiques bisubstitués contiennent donc des motifs anhydroglucoses que l'on peut représenter par la formule

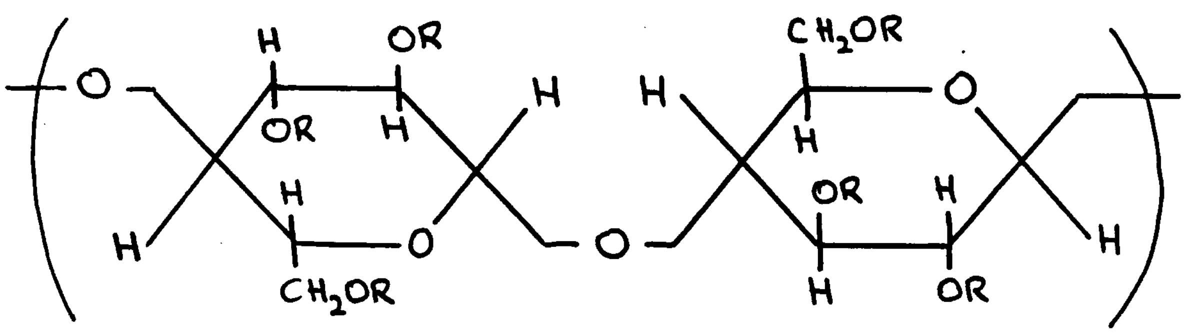

dans laquelle R peut représenter l'hydrogène ou un radical choisi parmi les radicaux alkyles et hydroxyalkyles, avec les réserves que les R ne sont pas tous identiques et qu'au moins certains motifs anhydroglucoses contiennent deux radicaux différents.

Les radicaux alkyles sont de préférence choisis parmi les radicaux méthyle, éthyle, propyle et butyle. Un radical alkyle tout particulièrement préféré est le radical méthyle.

Les radicaux hydroxylakyles sont de préférence choisis parmi les radicaux hydroxyéthyle, hydroxypropyle et hydroxybutyle.

Une classe préférée d'éthers cellulosiques bisubstitués utilisables selon l'invention est constituée par les méthyléthyléthers de la cellulose contenant en outre des substituants hydroxyalkoxyles contenant de 2 à 4 atomes de carbone (hydroxyéthoxyles, hydroxypropoxyles ou hydroxybutoxyles). En général, ces méthyléthers de la cellulose ont une teneur en groupes méthoxyles comprise entre environ 18 et environ 32 % en poids et une teneur en groupes hydroxyalkoxyles comprise entre environ 3 et environ 30 % en poids.

La viscosité de ces méthyléthers de la cellulose n'est pas critique et est en général comprise entre environ 10 et environ 4000 mPa.S (millipascals.seconde) (mesurée en solution aqueuse à 2 % à une température de 20 °C). De préférence, cette viscosité est comprise entre environ 20 et environ 1500 mPa.S.

Parmi ces produits, d'excellents résultats ont été enregistrés avec les méthylhydroxyéthylcelluloses commercialisés par Henkel sous la dénomination MHEC 250 et par Hoechst sous les dénominations TYLOSE MH 20, - MH 300 et - MH 1000 et avec les méthylhydroxypropylcelluloses commercialisées par Celanese sous la dénomination CELACOL HPM450, par Henkel sous la dénomination CULMINAL MHPC 100 et par Dow Chemical sous les dénominations METHOCEL F50 et K100.

Au cours du traitement par chauffage du copolymère, les sousproduits de l'hydrolyse provoquent l'acidification du milieu d'hydrolyse. Cette évolution du milieu d'hydrolyse vers les pH acides peut provoquer la scission des chaînes polymériques et donc une diminution, qui peut être très sévère, de la masse moléculaire moyenne du copolymère. Dès lors, dans la mesure où le pH du milieu d'hydrolyse évolue vers des valeurs trop basses, on y ajoute éventuellement un agent (4) de réglage du pH, généralement choisi parmi les bases organiques, les bases inorganiques et les mélanges tampons. A titre de bases organiques, on peut citer les amines et les amides, de préférence hydrosolubles. A titre de bases inorganiques, on peut citer les hydroxydes de métaux alcalins et d'ammonium. Des exemples de bases organiques et inorganiques utilisables comme agents (4) sont les composés réactifs vis-à-vis du formaldéhyde énumérés dans le brevet US-A-3225005 de Hoechst.

L'agent (4) peut également être choisi parmi les mélanges-tampons, tels que les mélanges d'un acide faible et d'un de ses sels et les mélanges de deux sels d'acides faibles. Un mélange tampon préféré est le mélange des phosphates mono- et dibasiques de sodium et/ou de potassium.

Le milieu d'hydrolyse peut éventuellement contenir aussi les ingrédients (5) à (7), en particulier si ce milieu est le milieu même dans lequel on a opéré la copolymérisation.

Outre les ingrédients (1) à (3) et les éventuels ingrédients (4) à (7), le milieu d'hydrolyse peut également contenir éventuellement d'autres ingrédients, tels que des solvants et/ou des agents gonflants du polymère, choisis en général parmi les alcools monohydriques tels que le méthanol et les alcools polyhydriques, tels que l'éthylène glycol et le glycérol, ainsi que les éthers et esters de ces derniers; le milieu d'hydrolyse peut également contenir les additifs conventionnels des polyacétals, tels que des stabilisants, des antioxydants, etc.

Lorsque le milieu d'hydrolyse dérive du milieu même dans lequel on a opéré la copolymérisation, il est le plus souvent constitué d'une phase organ ique supérieure et d'une phase aqueuse inférieure qui comprend la majeure partie des ingrédients (1), (2) et (3).

La durée du traitement par chauffage du copolymère est notamment conditionnée par la nature des ingrédients du milieu d'hydrolyse et leur concentration; elle est généralement comprise entre quelques secondes et dix heures environ et de préférence entre cinq minutes et une heure. Ce traitement s'effectue en portant le milieu d'hydrolyse à une température inférieure à la température de dégradation du copolymère, généralement comprise entre environ 80 et environ 180 °C, de préférence entre environ 130 et environ 165 °C.

La concentration des ingrédients (1) à (3) et éventuels (4) à (7) dans le milieu d'hydrolyse n'est pas critique et peut varier dans une large mesure. Le copolymère (1) est généralement présent dans le milieu d'hydrolyse à raison de 1 à 50 %, de préférence à raison de 5 à 20 %, en poids total de ce dernier.

L'eau (2), dans laquelle se trouvent le plus souvent à l'état dissous l'éther cellulosique bisubstitué (3) et les éventuels agents de réglage du pH (4), est en général présente à raison de 20 à 80 % en poids total du milieu d'hydrolyse, de préférence à raison de 30 à 70 % en poids.

L'éther cellulosique bisubstitué (3), quant à lui, est présent en quantité au moins suffisante pour éviter la prise en masse du copolymère. Cette quantité, déterminée par des essais de routine pour chaque éther particulier dans les conditions opératoires choisies, varie en général entre 0,01 et 10 % en poids de copolymère présent dans le milieu, de préférence entre 0,1 et 5 % en poids. Des quantités trop importantes d'éther (3) sont déconseillées, surtout quand le milieu d'hydrolyse contient aussi le solvant (5) car il y a alors formation d'émulsions rendant difficile la séparation finale du copolymère.

Le solvant organique (5) et le trioxane non copolymérisé (6) formant, quand ils sont présents ensemble, la phase organique supérieure du milieu d'hydrolyse, représentent en général de 15 à 75 % en poids de ce dernier, de préférence de 25 à 50 % en poids environ. De plus, lorsque la quantité de trioxane (6) éventuellement présent est très nettement supérieure à celle du copolymère (1) dans le milieu d'hydrolyse, on a constaté une tendance à l'agglomération du copolymère. On préfère dès lors que la quantité de trioxane (6) soit au plus égale à celle du copolymère dans ce milieu.

Enfin, l'agent de réglage (4) éventuel est ajouté au milieu d'hydrolyse en quantité, déterminée par l'expérience en tenant compte de la présence éventuelle des résidus inactivés de catalyseur, telle que le pH soit en général maintenu entre 8 et 3, de préférence entre 7 et 5.

Le copolymère obtenu, séparé du milieu d'hydrolyse par tout moyen conventionnel, est généralement lavé et séché. Les copolymères fabriqués selon le procédé de l'invention sont recueillis sous forme de billes régulières et bien formées. Leur stabilité thermique est remarquable.

L'invention est illustrée mais non limitée par les exemples suivants.

Exemple 1

Dans un réacteur de 5 l muni d'un système d'agitation, on introduit

- 985 g de trioxane purifié par cristallisation de sa solution dans le solvant organique (coupe paraffinique en C $_{7-9}$ commercialisée par ESSO sous la dénomination ISOPAR-E) ayant servi à l'extraire de son milieu de synthèse aqueux;
- 40 g d'oxyde d'éthylène distillé et séché sur tamis moléculaire
- 1000 g d'ISOPAR-E;
- 0,125 g d'un catalyseur qui est un complexe de coordination du fluorure de bore avec l'éther diéthylique dilué dans environ 5 g d'hexane.

La polymérisation est ensuite conduite pendant 2 heures à 60 °C. A la fin de cette période, le catalyseur est désactivé par injection de tributylamine au rapport molaire tributylamine/catalyseur de 5.

Le milieu de polymérisation est ensuite additionné d'eau contenant 0,13 % en poids de méthylhydroxypropylcellulose commercialisée par Dow Chemical sous la dénomination METHOCEL K 100, et contenant un mélange tampon constitué de $Na_2HPO_4$ et de $KH_2PO_4$ en quantité propre à maintenir le pH du milieu entre 6,0 et 6,5 environ.

La composition du milieu d'hydrolyse est donc la suivante, en % en poids :

- copolymère : 12,5
- trioxane non polymérisé : 12,5
- solvant organique : 25
- eau (contenant les additifs susmentionnés) : 50

L'hydrolyse est poursuivie en maintenant le milieu à 150 °C pendant 30 minutes. Le copolymère obtenu à l'issue de cette opération est séparé aisément du milieu d'hydrolyse et séché de manière conventionnelle. Il contient environ 2 % molaires d'unités oxyéthyléniques et se présente sous la forme de billes de dimensions moyennes comprises entre 0,1 et 1 mm. Il est caractérisé par une "stabilité base" (stabilité thermique déterminée comme décrit dans le brevet US-A-4035338 de UBE Industries Ltd, colonne 6, lignes 15 à 35) de 97 %.

Exemple 2

On reproduit exactement l'exemple 1, sauf que l'eau ajoutée au milieu de polymérisation contient 0,13 % en poids de méthylhydroxyéthylcellulose commercialisée par Henkel sous la dénomination MHEC 250.

Le copolymère obtenu à l'issue de cette opération présente les mêmes caractéristiques que celui de l'exemple 1.

Exemple 3 (comparatif)

On reproduit exactement l'exemple 1, sauf que l'eau ajoutée au milieu de polymérisation contient 0,13 % en poids de méthylcellulose commercialisée par Dow Chemical sous la dénomination METHOCEL MC 15. On constate la prise en masse du copolymère dans le milieu d'hydrolyse. Cet exemple montre que les éthers de cellulose qui ne sont pas bisubstitués ne permettent pas d'éviter la prise en masse du copolymère dans le milieu d'hydrolyse.

## Revendications

**1.** Procédé pour la fabrication de copolymères oxyméthyléniques stabilisés contre la dégradation thermique comprenant le chauffage du copolymère dans un milieu contenant de l'eau, caractérisé en ce que le milieu contient en outre un éther cellulosique bisubstitué dont au moins une partie des groupements hydroxyles contenus dans les unités anhydroglucoses constitutives sont substitués par deux substituants différents choisis parmi les radicaux alkyles et hydroxyalkyles.

**2.** Procédé selon la revendication 1, caractérisé en ce que l'éther cellulosique bisubstitué est choisi parmi les méthyléthyléthers de la cellulose contenant en outre des substituants hydroxyalkoxyles contenant de 2 à 4 atomes de carbone.

**3.** Procédé selon l'une des revendications 1 à 2, caractérisé en ce que le milieu contient en outre un agent de réglage du pH.

**4.** Procédé selon l'une des revendications 1 à 3, caractérisé en ce que le milieu est porté à une température comprise entre environ 130 et environ 165 °C.

5. Procédé selon l'une des revendications 1 à 4, caractérisé en ce que l'éther cellulosique bisubstitué est présent dans le milieu en quantités comprises entre 0,01 et 10 % en poids du copolymère.

6. Procédé selon l'une des revendications 1 à 5, caractérisé en ce que le milieu dans lequel le copolymère est chauffé résulte de l'addition de l'eau, de l'éther cellulosique bisubstitué et de l'éventuel agent de réglage du pH au milieu même dans lequel on a synthétisé le copolymère.

7. Application du procédé selon l'une des revendications 1 à 6 à la fabrication de copolymères stabilisés contenant des unités récurrentes oxyméthyléniques et 1 à 4 % molaires d'unités récurrentes oxyalkyléniques.

**Claims**

1. Process for manufacturing oxymethylene copolymers stabilized against thermal degradation, comprising the heating of the copolymer in a medium containing water, characterized in that the medium contains, in addition, a disubstituted cellulose ether, in which at least part of the hydroxyl groups present in the constituent anhydroglucose units are substituted with two different substituents chosen from alkyl and hydroxyalkyl radicals.

2. Process according to Claim 1, characterized in that the disubstituted cellulose ether is chosen from methyl ethyl ethers of cellulose containing, in addition, hydroxyalkyl substituents which contain from 2 to 4 carbon atoms.

3. Process according to either of Claims 1 and 2, characterized in that the medium contains, in addition, an agent for adjusting the pH.

4. Process according to one of Claims 1 to 3, characterized in that the medium is brought to a temperature between approximately 130 and approximately 165 °C.

5. Process according to one of Claims 1 to 4, characterized in that the disubstituted cellulose ether is present in the medium in amounts of between 0.01 and 10% of the weight of the copolymer.

6. Process according to one of Claims 1 to 5, characterized in that the medium in which the copolymer is heated results from the addition of water, the disubstituted cellulose ether and the possible agent for adjusting the pH, to the same medium in which the copolymer has been synthesized.

7. Application of the process according to one of Claims 1 to 6 for the manufacture of stabilized copolymers containing repeated oxymethylene units and 1 to 4 mol% of repeated oxyalkylene units.

**Patentansprüche**

1. Verfahren zur Herstellung von gegen Wärmeabbau stabilisierten Oxymethylencopolymeren, das das Erwärmen des Copolymers in einem Wasser enthaltenden Medium umfaßt, dadurch gekennzeichnet, daß das Medium außerdem einen bisubstituierten Zelluloseether enthält, wovon wenigstens ein Teil der in den wesentlichen Anhydroglukose-Einheiten enthaltenen Hydroxylgruppen durch zwei verschiedene Substituenten, ausgewählt unter den Alkyl- und Hydroxyalkylresten, substituiert ist.

2. Verfahren nach Anspruch 1, dadurch gekennzeichnet, daß der bisubstituierte Zelluloseether ausgewählt ist unter den Methylethylethern der Zellulose, die außerdem Hydroxyalkoxyl-Substituenten mit 2 bis 4 Kohlenstoffatomen enthalten.

3. Verfahren nach einem der Ansprüche 1 bis 2, dadurch gekennzeichnet, daß das Medium außerdem ein pH-Steuerungsmittel enthält.

4. Verfahren nach einem der Ansprüche 1 bis 3, dadurch gekennzeichnet, daß das Medium auf eine Temperatur zwischen etwa 130 und etwa 165 °C gebracht wird.

5. Verfahren nach einem der Ansprüche 1 bis 4, dadurch gekennzeichnet, daß der bisubstituierte

Zelluloseether anwesend ist in dem Medium in Mengen zwischen 0,01 und 10 Gew.-% des Copolymers.

**6.** Verfahren nach einem der Ansprüche 1 bis 5, dadurch gekennzeichnet, daß das Medium in dem das Copolymer erwärmt wird aus dem Zufügen des Wassers, des bisubstituierten Zelluloseethers und dem etwaigen pH-Steuerungsmittels zu demselben Medium stammt, in dem das Copolymer synthetisiert wurde.

**7.** Anwendung des Verfahrens nach einem der Ansprüche 1 bis 6 zur Herstellung von stabilisierten Copolymeren, die wiederkehrende Oxymethylen-Einheiten und 1 bis 4% molare Einheiten wiederkehrende Oxyalkylen-Einheiten enthalten.